# EUROPÄISCHE PATENTSCHRIFT

(11) **EP 2 588 737 B1**
(45) Veröffentlichungstag und Bekanntmachung des Hinweises auf die Patenterteilung: **06.08.2014**
(21) Anmeldenummer: 11725089.4
(22) Anmeldetag: 14.06.2011
(51) Int. Cl.: F02M 25/07, F16H 25/16, F16H 25/18, F16H 37/12, F16K 31/04, F16K 31/53, H02K 7/116, F16K 31/528

(54) **STELLVORRICHTUNG**
VALVE ACTUATOR
ACTIONNEUR DE VALVE

(30) Priorität: 29.06.2010 DE 102010025538
(43) Veröffentlichungstag der Anmeldung: 08.05.2013
(73) Patentinhaber: Pierburg GmbH, 41460 Neuss (DE)
(72) Erfinder: NOWAK, Martin, 51379 Leverkusen (DE); TÖNNESMANN, Andres, Dr., 52066 Aachen (DE); BREUER, Michael, Dr., 52152 Simmerath (DE); DISMON, Heinrich, 52538 Gangelt (DE); KÖSTER, Andreas, 45149 Essen (DE)
(74) Vertreter: Patentanwälte ter Smitten Eberlein Rütten Partnerschaftsgesellschaft
(86) Internationale Anmeldenummer: PCT/EP2011/059837
(87) Internationale Veröffentlichungsnummer: WO 2012/000780

(56) Entgegenhaltungen:
- EP-A1- 1 319 879
- EP-A1- 1 526 272
- EP-A2- 1 632 674
- EP-A2- 1 647 698
- EP-A2- 1 882 843

## Beschreibung

Die Erfindung betrifft eine Stellvorrichtung zur Umwandlung einer rotatorischen Bewegung in eine im Wesentlichen translatorische Bewegung mit einer Antriebseinheit, die ein Drehmoment erzeugt, einer Antriebswelle, auf der ein Exzenter drehfest angeordnet ist, und die über die Antriebseinheit in Drehung versetzbar ist, einem Exzenterausgangsbolzen, die an einem zur Antriebswelle gegenüberliegenden Endbereich des Exzenters angeordnet ist und in einer Kulisse eines Kopplungselementes bewegbar ist und einem über das Kopplungselement bewegbaren Verstellelement.

Derartige Stellvorrichtungen können im Bereich des Kraftfahrzeugbaus in einer Vielzahl von Anwendungen im Bereich des Verbrennungsmotors verwendet werden. So können beispielsweise Abgasrückführventile, Waste-Gate-Ventile, Registerklappen oder VTG-Steller mittels derartiger Stellvorrichtungen angetrieben werden.

Diese Stellvorrichtungen weisen einen Elektromotor als Antriebseinheit auf, über den ein Getriebe und folgend eine Kurbel oder direkt eine Kurbel angetrieben wird. Diese Kurbel ist im folgenden Kraftübertragungsstrang mit einer Kulisse wirkverbunden, über die die Bewegung des Elektromotors in eine lineare oder auch eine rotatorische Bewegung eines Verstellelements umgewandelt wird. Das Verstellelement kann dabei entweder die Ventilstange selbst sein oder eine mit einem Hebel einer Drehwelle gekoppelte Betätigungsstange.

So wird in der EP 1 319 879 A1 ein von einem Elektromotor angetriebenes Ventil offenbart, bei dem exzentrisch zu einer Antriebswelle ein Exzenterausgangsbolzen angeordnet ist, auf der eine Rolle drehbar befestigt ist, die in einer Kulisse eines Kopplungselementes läuft. Die Rolle wird in eine Richtung mit einer Federkraft beaufschlagt. Die Abrollbahn der Kulisse des Kopplungselementes für die Rolle steht dabei senkrecht zur Bewegungsrichtung des Kopplungselementes, wobei das Ventil eine rein translatorische Bewegung ausführt. Entsprechend liegt der Verstellweg des Ventils zum Drehwinkel der Kurbel derart fest, dass im Bereich der oberen und unteren Endlage der Kurbel ein durchfahrener Winkel einen geringeren Hub des Ventils bewirkt als im mittleren Bereich zwischen den Endlagen der Kurbel. Entsprechend ist eine gewünschte Kraft-Hublinie nicht einstellbar.

Des Weiteren ist aus der EP 1 526 272 B1 ein Abgasrückführventil bekannt, bei dem ein Elektromotor als Antriebseinheit dient, welches eine Kurbel antreibt, auf deren Ausgangswelle eine Rolle angeordnet ist, die in einer Kulisse eines scheibenförmigen Kopplungselementes abrollt. Das Kopplungselement ist mit der Drehwelle einer Abgasrückführklappe drehfest verbunden, so dass durch Drehung der Kurbel eine Drehung des Kopplungselementes und somit der exzentrisch gelagerten Klappe erfolgt. Ein Linearantrieb wird ebensowenig offenbart wie die Formung einer gewünschten Drehwinkel- Hub- Kraftlinie. Es bestehen jedoch Probleme bei der Lagerung der Kulissenscheibe, deren einziger Lagerpunkt die Drehwelle ist, auf die somit Biegemomente einwirken.

Es stellt sich daher die Aufgabe, eine Stellvorrichtung zu schaffen, mit welcher eine rotatorische Bewegung in eine im Wesentlichen translatorische Bewegung umgeformt wird, wobei Kraft-Hub-Verlauf oder Drehwinkel-Hubverlauf für verschiedene Anwendungsfälle wählbar sind. Dabei sollen die benötigten Betätigungsmomente bei der Verstellung minimiert werden, so dass kleinere Antriebseinheiten genutzt werden können. Die Stellvorrichtung soll robust und unempfindlich gegenüber Vibrationen oder sonstigen Belastungen sein.

Diese Aufgabe wird durch den kennzeichnenden Teil des Hauptanspruchs gelöst.

Dadurch, dass das Kopplungselement mit der Kulisse in seiner Erstreckungsebene drehbeweglich gelagert ist, werden die benötigten Betätigungsmomente bei der Verstellung deutlich reduziert, so dass kleine Antriebe verwendet werden können.

Vorzugsweise ist das Kopplungselement an einem ersten Endbereich um eine Drehachse drehbar gelagert und an einem zur Kulisse gegenüberliegenden Endbereich des Kopplungselementes das Verstellelement drehbeweglich befestigt ist. Hierdurch kann das Kopplungselement fest am Gehäuse gelagert werden. Zusätzlich werden Kippbewegungen senkrecht zur Erstreckungsrichtung durch die Lagerung des Verstellelementes deutlich eingeschränkt. Hierdurch entsteht ein robuster Aufbau der Stellvorrichtung.

In einer besonders bevorzugten Ausführung beschreibt die Kulisse eine Führungsbahn, die zumindest abschnittsweise einen Winkel zu einer zur Hauptbewegungsrichtung des Verstellelementes senkrechten Ebene einschließt. Durch das Zusammenspiel von exzentrischem Antrieb und einer nicht senkrecht zum Hub des Ventils verlaufenden Kurvenbahn können in großem Umfang Kraft-Hub-Verläufe und Drehwinkel-Hub-Verläufe eingestellt werden, die eine Anpassung einer derartigen Stellvorrichtung an eine Vielzahl unterschiedlicher Anwendungen ermöglichen.

In einer bevorzugten Ausführung beschreibt die Kulisse eine Kurve mit sich ändernder Steigung. So entstehen zusätzliche Möglichkeiten zur Anpassung von Kraft-Hubverläufen an bestimmte Anwendungsfälle.

Vorzugsweise ist auf dem Exzenterausgangsbolzen eine Rolle oder ein Lager angeordnet, welches in der Kulisse läuft, so dass die Reibung zwischen der Kulisse beziehungsweise deren Abrollbahn und der Außenbahn des abrollenden Körpers, hier dem Lager oder der Rolle, minimiert wird. Die Hubkraft kann so durch entsprechende Ausgestaltung der Kulisse beispielsweise in einem nennenswerten Bereich um mindestens einen der beiden Endanschläge konstant gehalten werden. Die verfügbare Stellkraft wird hierdurch unabhängig von Toleranzen, welche beispielsweise durch thermische Dehnung der Ventilstange auftreten könnten. Ein solcher nahezu konstanter Kraftverlauf im Bereich der geschlossenen Stellung über etwa 15-25% des Vollhubs hinweg wird insbesondere bei einer Verwendung der Stellvorrichtung als Steller eines Waste-Gate Ventils wegen der herrschenden Gasdruckkräfte an der Klappe gefordert.

In einer vorteilhaften Ausgestaltung der Erfindung ist das Verstellelement in einem Gehäuse in einer Gehäuseöffnung von einem Innenring radial umschlossen, der von einem Elastomerring umgeben ist, der sich am Innenumfang am Innenring abstützt und der sich am Außenumfang an der Gehäuseöffnung abstützt. Durch einen derartigen Aufbau wird trotz des leichten Kippens bei der Bewegung des Verstellelementes eine weitgehend gasdichte Durchführung des Verstellelementes im Gehäuse erreicht.

In einer weiterführenden Ausbildung der Erfindung weist der Innenring an seinen axial gegenüberliegenden Enden einen Durchmesser auf, der größer ist als der zugeordnete Durchmesser der Gehäuseöffnung und einer Öffnung des Sicherungsringes. Dadurch wird bei der Kippbewegung des Verstellelementes ein axiales Verschieben des Innenringes begrenzt.

Um eine gewünschte Übersetzung beziehungsweise Untersetzung zu erreichen kann die Antriebswelle als Abtriebswelle eines Getriebes dienen, welches über die Antriebseinheit antreibbar ist.

Eine weitere Vereinfachung des Antriebes wird dadurch erhalten, dass der Exzenter einstückig mit einem Abtriebszahnrad eines Getriebes ausgebildet ist, so dass der Exzenterausgangsbolzen am Abtriebszahnrad befestigt ist. Dies vereinfacht die Montage und reduziert den benötigten Bauraum.

In einer bevorzugten Weiterbildung der Erfindung ist am Verstellelement ein Magnet befestigt, der mit einem Sensor zusammenwirkt, der ein magnetisches Feld in zumindest zwei zueinander senkrecht stehenden Richtungen misst. Aufgrund dieser zueinander senkrecht stehenden zu messenden Feldlinien wird es möglich einen Winkel der Feldlinien zu bestimmen. Durch entsprechende Kalibrierung ist hierdurch eine zuverlässige Lagerückmeldung des Verstellelementes in translatorischer Bewegungsrichtung trotz des Kippverhaltens des Verstellelementes möglich. Es entsteht eine Toleranz bezüglich radialer Bewegungen des Verstellelementes.

Es wird somit eine Stellvorrichtung geschaffen, bei der über die Ausformung der Kulisse eine Möglichkeit einer wählbaren Kraft-Hubeinstellung geschaffen wird, in dem der gewählte Drehwinkelbereich zur Kulisse entsprechend abgestimmt wird. Dabei werden die benötigten Betätigungsmomente bei der Bewegungsübertragung minimiert, so dass kleine Antriebe verwendet werden können. Auch eine Einstellung zwischen Drehwinkel und Hub zur besseren Dosierung ist mit der erfindungsgemäßen Stellvorrichtung einstellbar.

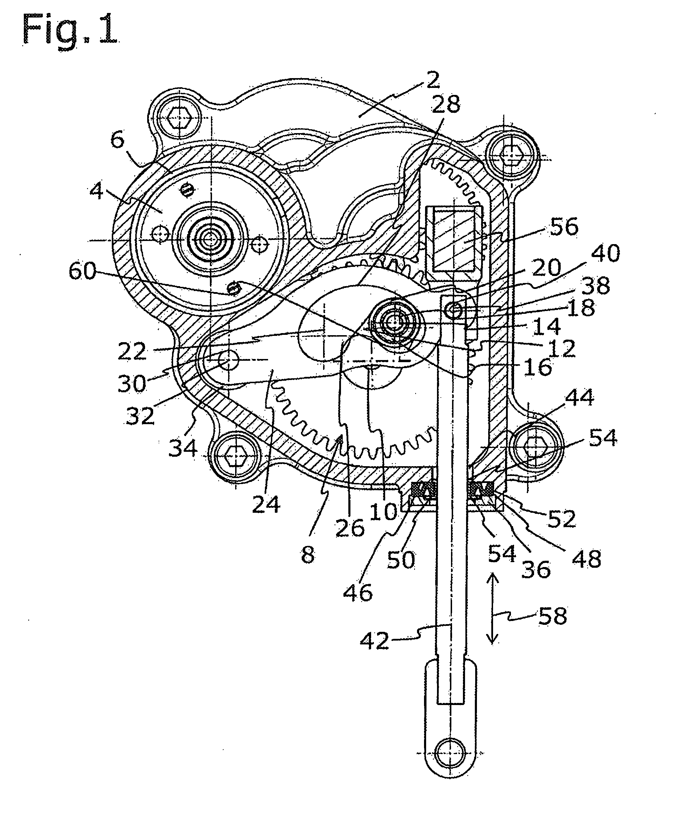

Ein Ausführungsbeispiel einer erfindungsgemäßen Stellvorrichtung ist in der Figur dargestellt und wird nachfolgend beschrieben.

Die Figur zeigt eine Seitenansicht der erfindungsgemäßen Stellvorrichtung in geschnittener Darstellung.

Die Stellvorrichtung besteht aus einem Gehäuse 2, in dem ein als Antriebseinheit 4 dienender Elektromotor in einer entsprechend ausgeformten Aufnahme 6 des Gehäuses 2 angeordnet ist.

Die Antriebseinheit 4 treibt über ein Getriebe 8, weiches als Stirnradgetriebe ausgebildet ist, eine Antriebswelle 10 an, auf der ein Abtriebszahnrad 11 des Getriebes 8 angeordnet ist. Auf der Antriebswelle 10 ist ein Exzenter 12 befestigt an dessen gegenüberliegendem Ende ein Exzenterausgangsbolzen 14 befestigt ist, die parallel zur Antriebswelle 10 verläuft, so dass die Wellen 10, 14 und der Exzenter 12 als Kurbel dienen.

Auf dem Exzenterausgangsbolzen 14 ist ein Lager 16 angeordnet, dessen Innenring 18 auf dem Exzenterausgangsbolzen 14 befestigt ist und dessen Außenring 20 in einer Kulisse 22 eines Kopplungselementes 24 abläuft. Die Kulisse 22 wird durch eine Öffnung gebildet, deren Höhe durch zwei gegenüberliegende Wände 26, 28 begrenzt wird, deren Abstand etwa dem Umfang des Lagers 16 entspricht und deren Bogenlänge durch die Länge des Exzenters 4 sowie dessen Verstellwinkel bestimmt wird. Die begrenzenden Wände 26, 28, welche als Führungsbahn des Lagers 16 dienen, sind als stetige parallel zueinander verlaufende Kurven mit sich ändernder Steigung ausgebildet.

Das Kopplungselement 24 ist im Wesentlichen scheibenförmig ausgebildet und weist an einem ersten Endbereich eine Bohrung 30 auf, durch die eine Drehachse in Form eines in Lagern 34 drehbar gelagerten Bolzens 32 ragt, der fest mit dem Kopplungselement 24 verbunden ist, so dass das Kopplungselement 24 über die Lager 34 in seiner Erstreckungsebene drehbar gelagert ist. Hierzu ist an den gegenüberliegenden Seiten des Kopplungselementes 24 in einem nicht dargestellten Deckel und im Gehäuse 2 jeweils eines der Lager 34 befestigt, wodurch eine zweiseitige Lagerung des Kopplungselementes 24 besteht.

Am zur Bohrung 30 entgegengesetzten Endbereich des Kopplungselementes 24 ist eine weitere nicht dargestellte Bohrung ausgebildet, in welcher ein Bolzen 38 befestigt ist, dessen zum Kopplungselement 24 gegenüberliegenden Enden in entsprechende Aufnahmeöffnungen 40 eines Verstellelementes 42 ragen, dass an diesem Ende geschlitzt ausgebildet ist, so dass sich dieses Ende des Kopplungselementes 24 im Schlitz bewegen kann. Das Verstellelement 42 ist entweder eine Ventilstange oder ein Betätigungshebel der direkt oder indirekt mit einer Drehwelle einer Klappe gekoppelt ist. Die Kulisse 22 befindet sich auf dem scheibenförmigen Kopplungselement 24 zwischen den beiden Bohrungen 30.

Das Verstellelement 42 ragt durch eine Gehäuseöffnung 44 aus dem Gehäuse 2 nach außen. Die Gehäuseöffnung 44 ist im Wesentlichen als Durchgangsbohrung ausgeführt, deren Durchmesser jedoch größer ist als der Durchmesser des Verstellelementes 42, so dass dieses in der Gehäuseöffnung 44 eine Kippbewegung ausführen kann. In der Gehäuseöffnung 44 sind zwei Absätze 46, 48 ausgebildet, so dass drei nach außen sprunghaft steigende hintereinanderliegende Durchmesser der Gehäuseöffnung 44 entstehen. Um das Verstellelement 42 ist ein Innenring 50 angeordnet, in dem das Verstellelement 42 gleiten kann. Dieser Innenring 50 ist von einem Elastomerring 52 umgeben, der den Innenring 50 in seiner Position im Gehäuse hält, indem an den axialen Enden des Innenrings zwei Erweiterungen 54 ausgebildet sind, die den Elastomerring 52 umgreifen. Der Elastomerring 52 liegt entsprechend mit seinem Innenumfang gegen den Innenring 50 und mit seinem Außenumfang gegen die Wände der Gehäuseöffnung 44 an. Axial liegt der Elastomerring 52 gegen den ersten Absatz 46 an. Sein anderes axiales Ende liegt gegen einen Sicherungsring 36 an, der von außen gegen den Absatz 48 geschoben wird und in dieser Position fixiert ist. Hierdurch wird eine axiale Bewegung des Elastomerringes 52 und des Innenrings 50 vermieden. Durch Verformung des Elastomerringes 50 ist lediglich eine Kippbewegung des Innenrings 52 möglich.

Alternativ wäre es möglich, die Erweiterungen 54 des Innenringes 50 jeweils mit einem größeren Durchmesser auszuführen als die Öffnung 44 und die Öffnung im Sicherungsring 36. Die axiale Ausdehnung wäre dann kleiner zu wählen als der Abstand zwischen dem Absatz 46 und dem Sicherungsring 36, um eine Kippbewegung zuzulassen. Ein axiales Verschieben des Innenrings 50 wäre dadurch minimiert.

Am im Gehäuse angeordneten axialen Ende des Verstellelementes 42 ist eine Aufnahme 54 für einen Magneten 56 ausgebildet. Dieser wird mit dem Verstellelement 42 bewegt und wirkt in bekannter Weise mit einem nicht dargestellten Sensor zusammen, der die Feldstärke in zwei orthogonal zueinander stehenden Richtungen misst. Hierdurch wird es möglich den Winkel der Feldlinien zu bestimmen, so dass das Ergebnis des Sensors von Fehlern durch eine auftretende Kippbewegung des Magneten befreit werden kann, da jeder Stellung des Magneten nur genau eine Kombination der beiden Feldstärken entspricht. Somit entsteht ein eindeutiges Ergebnis bei der Lagerückmeldung.

Wird die Antriebseinheit 4 ausgehend von der in der Figur dargestellten Position betätigt, wird die Antriebswelle 10 entgegen des Uhrzeigersinns gedreht. Damit dreht sich auch der Exzenter 12, so dass der Exzenterausgangsbolzen 14 in einem Kreisbogen entgegen des Uhrzeigersinns um die Drehachse der Antriebswelle 10 gedreht wird. Das Lager 16 rollt entsprechend mit seinem Außenring 20 entlang der Führungsbahn der Kulisse 22 auf der Wand 26 des Kopplungselementes ab. Die Führungsbahn ist so konturiert, dass über das Lager 16 eine Kraft auf die untere Wand 26 ausgeübt wird, durch die ein Drehmoment entsteht, welches das Kopplungselement 24 um die Drehachse 32 drehen lässt. Durch diese Drehung wird der Bolzen 38 in einem Kreisbogen um die Drehachse 32 gedreht. Die Drehachse 32 und der Bolzen 38 sind derart angeordnet, dass der Kreisbogen, auf dem sich der Bolzen 38 bewegt, eine deutlich größere Komponente in Hauptbewegungsrichtung 58 des Verstellelementes 42 aufweist als in einer senkrecht hierzu stehenden Richtung. Entsprechend wird das Verstellelement 42 über den Bolzen 38 nach unten gedrückt. Es entsteht jedoch gleichzeitig durch die Kreisbahn eine geringe Kippbewegung, die durch die kippbewegliche Abdichtung mittels des Elastomerringes 52 aufgefangen wird.

Ein erster durch das Abrollen des Lagers 16 durchfahrener Bereich der Kulisse 22 weist in Bezug auf eine zur Hauptbewegungsrichtung 58 des Verstellelementes 42 senkrecht stehende Ebene eine Steigung 60 auf, welche steiler ausgebildet ist als der jeweilige durch das Lager 16 überfahrene Kreisbogen. Hierdurch entsteht trotz der Aufwärtsbewegung des Lagers 16 eine Abwärtsbewegung der Kulisse 22 und somit des Kopplungselementes 24 und des Verstellelementes 42. Die Kulisse 22 ist im Wesentlichen nierenförmig ausgebildet und kann den jeweiligen Anforderungen an Kraft-Hubverlauf und Drehwinkel-Hubverlauf angepasst werden.

Neben diesem Vorteil der möglichen Einstellung eines gewünschten Kraftverlaufes je nach Ausgestaltung der Kulisse wird auch die insgesamt zur Verstellung aufzubringende Kraft reduziert, da aufgrund der Verwendung des drehbar angeordneten Kopplungselementes die benötigten Betätigungsmomente deutlich reduziert werden. Diese Stellvorrichtung ist an unterschiedliche Bedürfnisse beim Antrieb verschiedener Klappen oder Ventile anpassbar. Es ergeben sich somit Kostenvorteile durch die universelle Einsetzbarkeit beinahe aller Bauteile. Es sollte deutlich sein, dass der Schutzbereich der Ansprüche nicht auf das beschriebene Ausführungsbeispiel beschränkt ist, sondern je nach Anwendung beispielsweise unterschiedliche Formen der Führungsbahn gewünscht sein können, um zum vorteilhaften Kraft-Hub-Verlauf zu gelangen. Auch kann eine solche Stellvorrichtung mit oder ohne vorgeschalteter Unter- oder Übersetzung betrieben werden. Weitere konstruktive Änderungen sind selbstverständlich ebenfalls denkbar.

## Patentansprüche

1. Stellvorrichtung zur Umwandlung einer rotatorischen Bewegung in
eine im Wesentlichen translatorische Bewegung mit
einer Antriebseinheit (4), die ein Drehmoment erzeugt,
einer Antriebswelle (10), auf der ein Exzenter (12) drehfest angeordnet ist, und die über die Antriebseinheit (4) in Drehung versetzbar ist,
einem Exzenterausgangsbolzen (14), die an einem zur Antriebswelle (10) gegenüberliegenden Endbereich des Exzenters (12) angeordnet ist und in einer Kulisse (22) eines Kopplungselementes (24) bewegbar ist und
einem über das Kopplungselement (24) bewegbaren Verstellelement (42),
**dadurch gekennzeichnet, dass**
das Kopplungselement (24) mit der Kulisse (22) in seiner Erstreckungsebene drehbeweglich gelagert ist.

2. Stellvorrichtung zur Umwandlung einer rotatorischen Bewegung in eine translatorische Bewegung nach Anspruch 1,
**dadurch gekennzeichnet, dass**
das Kopplungselement (24) an einem ersten Endbereich um eine Drehachse (32) drehbar gelagert ist und an einem zur Kulisse (22) gegenüberliegenden Endbereich des Kopplungselementes (24) das Verstellelement (42) drehbeweglich befestigt ist.

3. Stellvorrichtung zur Umwandlung einer rotatorischen Bewegung in eine translatorische Bewegung nach einem der Ansprüche 1 oder 2,
**dadurch gekennzeichnet, dass**
die Kulisse (22) eine Führungsbahn beschreibt, die zumindest abschnittsweise einen Winkel zu einer zur Hauptbewegungsrichtung (58) des Verstellelementes (42) senkrechten Ebene einschließt.

4. Stellvorrichtung zur Umwandlung einer rotatorischen Bewegung in eine translatorische Bewegung nach einem der vorhergehenden Ansprüche,
**dadurch gekennzeichnet, dass**
die Führungsbahn eine Kurve mit sich ändernder Steigung beschreibt.

5. Stellvorrichtung zur Umwandlung einer rotatorischen Bewegung in eine translatorische Bewegung nach einem der vorhergehenden Ansprüche,
**dadurch gekennzeichnet, dass**
auf dem Exzenterausgangsbolzen (14) eine Rolle oder ein Lager (16) angeordnet ist, welches in der Kulisse (22) läuft.

6. Stellvorrichtung zur Umwandlung einer rotatorischen Bewegung in eine translatorische Bewegung nach einem der vorhergehenden Ansprüche,
**dadurch gekennzeichnet, dass**
das Verstellelement (42) in einem Gehäuse (2) in einer Gehäuseöffnung (44) von einem Innenring (50) radial umschlossen ist, der von einem Elastomerring (52) umgeben ist, der sich am Innenumfang am Innenring (50) abstützt und der sich am Außenumfang an der Gehäuseöffnung (44) abstützt.

7. Stellvorrichtung zur Umwandlung einer rotatorischen Bewegung in eine translatorische Bewegung nach Anspruch 6,
**dadurch gekennzeichnet, dass**
der Innenring (50) an seinen axial gegenüberliegenden Enden einen Durchmesser aufweist, der größer ist als der zugeordnete Durchmesser der Gehäuseöffnung (44) und einer Öffnung des Sicherungsringes (36).

8. Stellvorrichtung zur Umwandlung einer rotatorischen Bewegung in eine translatorische Bewegung nach einem der vorhergehenden Ansprüche,
**dadurch gekennzeichnet, dass**
die Antriebswelle (10) als Abtriebswelle eines Getriebes (8) dient, welches über die Antriebseinheit (4) antreibbar ist.

9. Stellvorrichtung zur Umwandlung einer rotatorischen Bewegung in eine translatorische Bewegung nach einem der vorhergehenden Ansprüche,
**dadurch gekennzeichnet, dass**
der Exzenter (12) einstückig mit einem Abtriebszahnrad (11) eines Getriebes (8) ausgebildet ist, so dass der Exzenterausgangsbolzen (14) am Abtriebszahnrad (11) befestigt ist.

10. Stellvorrichtung zur Umwandlung einer rotatorischen Bewegung in eine translatorische Bewegung nach einem der vorhergehenden Ansprüche,
**dadurch gekennzeichnet, dass**
am Verstellelement (42) ein Magnet (56) befestigt ist, der mit einem Sensor zusammenwirkt, der ein magnetisches Feld in zumindest zwei zueinander senkrecht stehenden Richtungen misst.

## Claims

1. Actuating device for converting a rotational motion into a **substantially translational** motion, comprising
a drive unit (4) generating a torque,
an input shaft (10) on which an eccentric (12) is arranged for rotation with the same, and which shaft is adapted to be rotated by the drive unit (4),
an eccentric output pin (14) provided at an end portion of the eccentric (12) opposite the output shaft (10), and movable in a slotted link (22) of a coupling element (24), and
an adjustment element (42) movable via the coupling element (24),
**characterized in that**
the coupling element (24) with the slotted link (22) is supported for rotational movement in its plane of extent.

2. Actuating device for converting a rotational motion into a **substantially translational** motion as defined in claim 1, **characterized in that** the coupling element (24) is supported at a first end portion for rotation about a rotational axis (32) and the adjustment element (42) is rotatably mounted at an end portion of the coupling element (24) opposite the slotted link (22).

3. Actuating device for converting a rotational motion into a **substantially translational** motion as defined in claim 1 or 2, **characterized in that** the slotted link (22) describes a guideway that, at least in sections thereof, forms an angle with a plane perpendicular to the main direction of movement (58) of the adjustment element (42).

4. Actuating device for converting a rotational motion into a **substantially translational** motion as defined in one of the preceding claims, **characterized in that** the guideway describes a curve with a changing slope.

5. Actuating device for converting a rotational motion into a **substantially translational** motion as defined in one of the preceding claims, **characterized in that** the eccentric output pin (14) is provided with a roller or a bearing (16) which moves in the slotted link (22).

6. Actuating device for converting a rotational motion into a **substantially translational** motion as defined in one of the preceding claims, **characterized in that** the adjustment element (42) is radially surrounded by an inner ring (50) in a housing opening (44) in a housing (2), the inner ring being surrounded by an elastomeric ring (52) whose inner circumference bears on the inner ring (50) and whose outer circumference bears on the housing opening (44).

7. Actuating device for converting a rotational motion into a **substantially translational** motion as defined in claim 6, **characterized in that** the diameter of the inner ring (50) at its axially opposite ends is larger than the associated diameter of the housing opening (44) and the opening of a circlip (36).

8. Actuating device for converting a rotational motion into a **substantially translational** motion as defined in one of the preceding claims, **characterized in that** the drive shaft (10) serves as the output shaft of a transmission (8) adapted to be driven via the drive unit (4).

9. Actuating device for converting a rotational motion into a **substantially translational** motion as defined in one of the preceding claims, **characterized in that** the eccentric (12) is formed integrally with an output gear (11) of a transmission (8) so that the eccentric output pin (14) is mounted to the output gear (11).

10. Actuating device for converting a rotational motion into a **substantially translational** motion as defined in one of the preceding claims, **characterized in that** a magnet (56) is mounted to the adjustment element (42), the magnet cooperating with a sensor that measures a magnetic field in at least two mutually perpendicular directions.

## Revendications

1. Actionneur pour la conversion d'un mouvement de rotation en **un mouvement essentiellement de translation,** comprenant
une unité d'entrainement (4) générant un couple,
un arbre d'entrainement (10) sur lequel un excentrique (12) est monté de manière à tourner avec ledit arbre, ledit arbre étant apte à être tourné par ladite unité d'entrainement (4),
un boulon de sortie de l'excentrique (14) disposé à une partie d'extrémité dudit excentrique (12) opposée à l'arbre d'entrainement (10), et déplaçable dans une coulisse (22) d'un élément de couplage (24), et
un élément d'ajustage (42) déplaçable par ledit élément de couplage (24),
**caractérisé en ce qu'**
avec la coulisse (22), ledit élément de couplage (24) est supporté mobil en rotation dans son plan d'extension.

2. Actionneur pour la conversion d'un mouvement de rotation en un **mouvement essentiellement de translation,** selon la revendication 1, **caractérisé en ce qu'**à une première partie d'extrémité, ledit élément de couplage (24) est supporté rotatif autour d'un axe de rotation (32), et que ledit élément d'ajustage (42) est monté mobil en rotation à une partie d'extrémité dudit élément de couplage (24) opposée à la coulisse (22).

3. Actionneur pour la conversion d'un mouvement de rotation en un **mouvement essentiellement de translation,** selon les revendications 1 ou 2, **caractérisé en ce que** la coulisse (22) décrit un trajet de guidage formant, au moins dans des sections, un angle avec un plan perpendiculaire à la direction principale de mouvement (58) dudit élément d'ajustage (42).

4. Actionneur pour la conversion d'un mouvement de rotation en un **mouvement essentiellement de translation,** selon l'une quelconque des revendications précédentes, **caractérisé en ce que** ledit trajet de guidage décrit une courbe avec pente changeante.

5. Actionneur pour la conversion d'un mouvement de rotation en un **mouvement essentiellement de translation,** selon l'une quelconque des revendications précédentes, **caractérisé en ce qu'**un rouleau ou un palier (16) est disposé sur ledit boulon de sortie de l'excentrique (14), qui se déplace dans la coulisse (22).

6. Actionneur pour la conversion d'un mouvement de rotation en un **mouvement essentiellement de translation,** selon l'une quelconque des revendications précédentes, **caractérisé en ce que** ledit élément d'ajustage (42) est entouré radialement par un anneau intérieur (50) dans une ouverture de boitier (44) dans un boitier (2), ledit anneau étant entouré par un anneau élastomérique (52) s'appuyant avec son pourtour intérieur sur ledit anneau intérieur (50) et s'appuyant avec son pourtour extérieur sur ladite ouverture de boitier (44).

7. Actionneur pour la conversion d'un mouvement de rotation en un **mouvement essentiellement de translation,** selon la revendication 6, **caractérisé en ce qu'**à ses extrémités axialement opposées, ledit anneau intérieur (50) a un diamètre plus grand que le diamètre associé de ladite ouverture de boitier (44) et celui de l'ouverture d'un anneau de sécurité (36).

8. Actionneur pour la conversion d'un mouvement de rotation en un **mouvement essentiellement de translation,** selon l'une quelconque des revendications précédentes, **caractérisé en ce que** ledit arbre d'entrainement (10) sert come arbre de sortie d'une transmission (8) apte à être entrainée par ladite unité d'entrainement (4).

9. Actionneur pour la conversion d'un mouvement de rotation en un **mouvement essentiellement de translation,** selon l'une quelconque des revendications précédentes, **caractérisé en ce que** ledit excentrique (12) est formé d'une seule pièce avec une roue dentée de sortie (11) d'une transmission (8) de sorte que ledit boulon de sortie de l'excentrique (14) est fixé sur ladite roue dentée de sortie (11).

10. Actionneur pour la conversion d'un mouvement de rotation en un **mouvement essentiellement de translation,** selon l'une quelconque des revendications précédentes, **caractérisé en ce qu'**un aimant (56) est fixé sur ledit élément d'ajustage (42), ledit aimant coopérant avec un capteur mesurant un champ magnétique dans au moins deux directions perpendiculaires entre eux.
